Europäisches Patentamt

**European Patent Office**

Office européen des brevets

(19)

(11) Publication number: **0 015 015**
**B1**

(12) # EUROPEAN PATENT SPECIFICATION

(45) Date of publication of patent specification: **15.12.82**

(51) Int. Cl.³: **B 60 G 9/02**

(21) Application number: **80200085.1**

(22) Date of filing: **31.01.80**

(54) Vehicle suspension.

(30) Priority: **02.02.79 GB 7903735**

(43) Date of publication of application:
**03.09.80 Bulletin 80/18**

(45) Publication of the grant of the patent:
**15.12.82 Bulletin 82/50**

(84) Designated Contracting States:
**DE FR GB IT SE**

(56) References cited:
**DE - A - 1 956 365**
**DE - B - 1 430 166**
**DE - B - 1 580 453**
**DE - C - 1 155 349**
**GB - A - 1 224 196**
**GB - A - 1 350 057**
**US - A - 2 531 621**

(73) Proprietor: **LEYLAND VEHICLES LIMITED**
**Lancaster House**
**Leyland Preston Lancashire (GB)**

(72) Inventor: **Abram, John Henry**
**Bramwell Cottage Back Lane**
**Newburgh Nr. Wigan Lancashire (GB)**

(74) Representative: **Rock, Olaf Colin**
**BL PATENT & TRADE MARK DEPARTMENT**
**Cowley Body Plant**
**Cowley Oxford OX4 5NL (GB)**

Courier Press, Leamington Spa, England.

## Vehicle suspension

This invention relates to a suspension for a wheeled vehicle.

A low floor height is desirable in a vehicle, such as a coach, to which access needs to be readily had from outside the vehicle.

The need for a low floor height can conflict with the use of previously known suspensions which make use of coil springs which in a low floor arrangement would result in extensive intrusions through the floor and into the vehicle interior. A solution to the question of intrusion is to utilise air springs which can be made of relatively short length. However sufficient length suspension travel can introduce further problems particularly if the vehicle has a wide range of load capacity.

A motor vehicle suspension is disclosed in GB—A 1,350,057 in which an axle is located longitudinally of the vehicle by a pair of longitudinally extending arms; each arm comprises a spring steel leaf disposed in a substantially vertical plane; one end of each leaf is pivotally connected to the vehicle body structure and the leaf is fixed to the axle so that the twisting movement of the axle relative to the body structure is accommodated by twisting of the leaf but rotation of the axle is resisted by the leaf; and suspension springs are mounted between the body structure and the arms at the end of the arms remote from their pivotal mounting to the vehicle body structure and the axle is fixed to the arms between the suspension springs and the pivotal mountings.

With a suspension of this kind a considerable area is needed beneath the floor of the vehicle to accommodate components of sufficient size to provide the desired characteristic. It is also difficult to use such a suspension for steerable vehicle wheels.

The present invention is intended to provide a suspension for a low floored vehicle which does not take up an excessive amount of underfloor space and which is also adapted to provide a steering system for the vehicle. According to the present invention a wheeled vehicle having a suspension comprising an axle having provision for at least one wheel at each end of the axle, the axle being located longitudinally of the vehicle by a pair of longitudinally extending arms which project both in front of and behind the axle, a beam parallel to and behind the axle and resilient means supporting the body of the vehicle on the beam, characterized in that

   i) the parts of the pair of the longitudinally extending arms projecting forwardly of the axle serve as extensions resilient in the vertical plane; the end of each resilient extension remote from the axle being pivotable coupled to an anchorage on the vehicle body; each resilient extension having a cross-section whose area reduces as the distance with the section from the axle increases; and

   ii) the parts of the pair of the longitudinally extended arms which project behind the axle serve as rigid connections between the axle and the beam.

Preferably the axle or the beam, or both, are coupled to the remainder of the vehicle by motion damping means.

Preferably the axle is of I-beam section.

Preferably the beam is laterally located relative to the rest of the vehicle by a Panhard rod.

Preferably the or each wheel at each end of the axle incorporates a steering linkage whereby the vehicle can be steered by way of the wheels.

Preferably the axle has a lowered central portion on which a steering crank is pivotably mounted.

An exemplary embodiment of the invention will now be described with reference to the accompanying drawings of a suspension system for a double deck bus of which:

   Figure 1 is a plan view;

   Figure 2 is a section of II—II of Figure 1; and

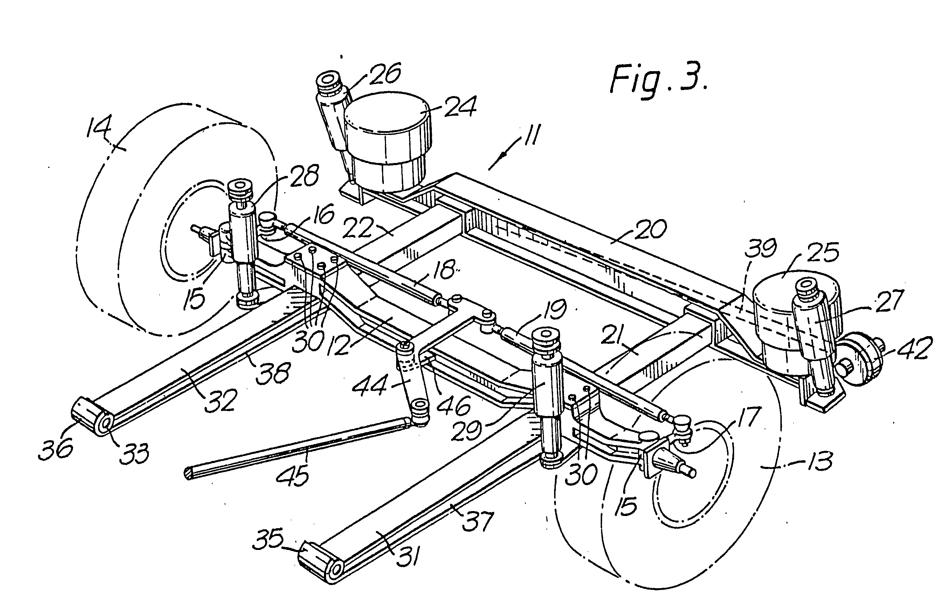

   Figure 3 is a perspective view.

The drawings show a sub-frame 11. This includes an axle 12 of I-section with road wheels 13, 14 mounted on the axle by way of bearings 15 to enable the wheels to be steered by way of steering arms 16, 17 and track rods 18, 19.

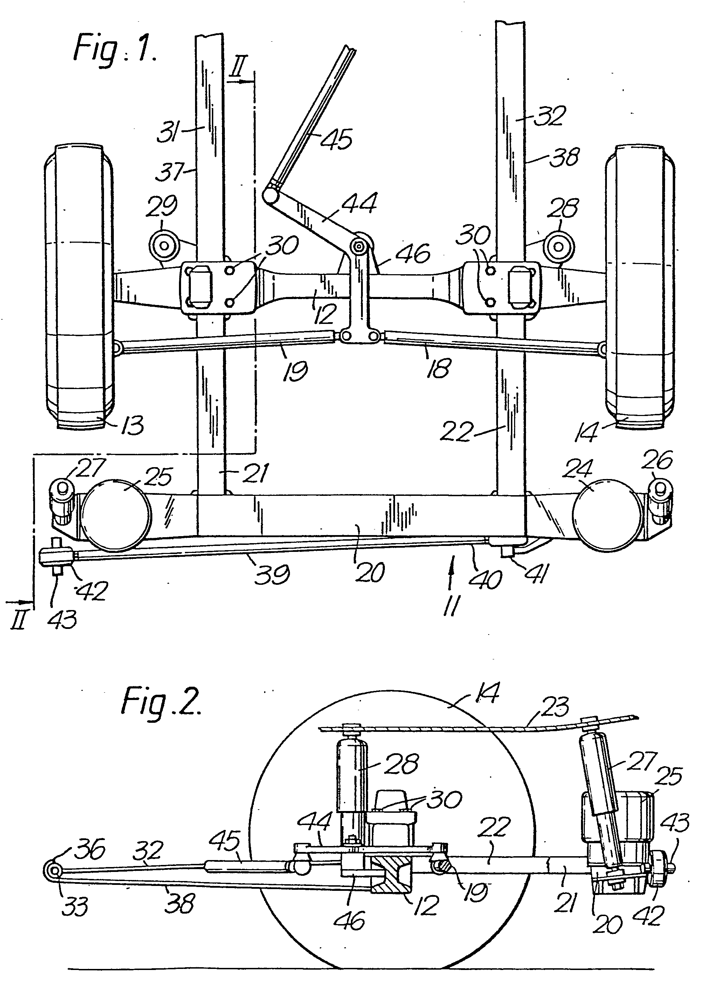

Beam 20 is rigidly secured to the axle 12 by way of rectangular section beams 21, 22. The vehicle body 23 (Figure 2) is supported on the beam (20) by way of air springs 24, 25 positioned at the extremities of the beam to give high roll stiffness and eliminate the need for an anti-roll bar. The air springs can readily be replaced by coil springs to make an all steel suspension. Rebound travel of the sub-frame is limited by shock absorbers 28, 29 pivotably coupled at one end to the axle 12 and at the other to body 23.

The beams 21, 22 are secured to axle by bolts 30. Single leaf springs 31, 32 project forwardly of the axle and are integral extensions of, respectively, beams 21, 22. The beams 21, 22 are constant cross-sectional ones to maintain the high roll stiffness induced by the outboard air springs, whereas the leaf springs 31, 32 are tapered, that is to say each cross-section has a reducing area as the distance of the section from the axle 12 increases.

The leading ends 35, 36 of springs 31, 32 are pivotably attached by pins 33 (Figure 2) to mounting anchorages on vehicle body 23.

A safety strap 37, 38 is provided for respective springs 31, 32 to control motion of the parts of the related taper leaf and sub frame should the taper leaf fracture.

A Panhard rod 39 is provided to locate the sub frame 11. End 42 of the rod 39 is coupled by pivot 43 to vehicle body 23. Track rods 18, 19 are coupled by a steering relay crank 44 to a connecting link 45, which is coupled to a drop arm of a conventional steering gearbox. The crank 44 is pivotably mounted on an extension 46 integral with axle 18.

**Claims**

1. A wheeled vehicle having a suspension comprising an axle (12) having provision for at least one wheel (13, 14) at each end of the axle, the axle being located longitudinally of the vehicle by a pair of longitudinally extending arms (21, 31; 22, 32) which project both in front of and behind the axle, a beam (20) parallel to and behind the axle (12) and resilient means (24, 25) supporting the body of the vehicle on the beam, characterized in that
   i) the parts (31, 32) of the pair of the longitudinally extending arms projecting forwardly of the axle serve as extensions (31, 32) resilient in the vertical plane; the end (35, 36) of each resilient extension remote from the axle (12) being pivotably coupled to an anchorage on the vehicle body; each resilient extension (31, 32) having a cross-section whose area reduces as the distance of the section from the axle increases; and
   ii) the parts (21, 22) of the pair of the longitudinally extending arms which project behind the axle (12) serve as rigid connections between the axle (2) and the beam (20).

2. A wheeled vehicle having a suspension as claimed in claim 1 characterised in that the axle (12) is coupled to the rest of the vehicle by motion damping means (28, 29).

3. A wheeled vehicle suspension as claimed in claim 1 or claim 2 characterised in that the beam (20) is coupled to the rest of the vehicle by motion damping means (25, 26).

4. A wheeled vehicle suspension as claimed in any preceding claim characterised in that the axle (12) is of I-beam section.

5. A wheeled vehicle suspension as claimed in any preceding claim characterised in that the beam (20) is laterally located relative to the rest of the vehicle by a Panhard rod (39).

6. A wheeled vehicle suspension as claimed in any preceding claim characterised in that the provision for the or each wheel (13, 14) at each end of the axle (12) incorporates a steering linkage (15, 16, 17, 18, 19) whereby the vehicle can be steered by way of the wheels (13, 14).

7. A wheeled vehicle suspension as claimed in claim 7 characterised by a steering crank (44) pivotably mounted on a lowered central portion of the axle (12).

**Revendications**

1. Véhicule à roues présentant une suspension comportant un essieu (12) pouvant recevoir au moins une roue (13, 14) à chaque extrémité, l'essieu étant positionné dans le sens longitudinal du véhicule par deux bras (21, 31; 22, 32) qui s'étendent dans le sens longitudinal et font saillie tant devant que derrière l'essieu, une traverse (20) parallèle à l'essieu (12) et disposée derrière celui-ci et des moyens élastiques (24, 25) supportant le corps du véhicule sur la traverse, caractérisé en ce que i) les parties (31, 32) des deux bras qui s'étendent dans le sens longitudinal et font saillie vers l'avant de l'essieu servent de prolongements (31, 32) élastiques dans le plan vertical, l'extrémité (35, 36) de chaque prolongement élastique qui est éloignée de l'essieu (12) étant articulée à un acrage sur le corps de véhicule, chaque prolongement élastique (31, 32) présentant une section transversale dont l'aire diminue à mesure que la distance séparant cette section de l'essieu augmente et ii) les parties (21, 22) des deux bras qui s'étendent dans le sens longitudinal et font saillie derrière l'essieu (12) servent de connexions rigides entre l'essieu (12) et la traverse (20).

2. Véhicule à roues présentant une suspension suivant la revendication 1, caractérisé en ce que l'essieu (12) est relié au reste du véhicule par des moyens amortisseurs de mouvements (28, 29).

3. Suspension pour véhicule à roues suivant la revendication 1 ou 2, caractérisée en ce que la traverse (20) est reliée au reste du véhicule par des moyens amortisseurs de mouvements (25, 26).

4. Suspension pour véhicule à roues suivant l'une quelconque des revendications précédentes, caractérisée en ce que l'essieu (12) est un profilé en I.

5. Suspension pour véhicule à roues suivant l'une quelconque des revendications précédentes, caractérisée en ce que la traverse (20) est positionée dans le sens latéral par rapport au reste du véhicule par une barre de Panhard (39).

6. Suspension pour véhicule à roues suivant l'une quelconque des revendications précédentes, caractérisée en ce que les moyens permettant de monter la roue ou chacune des roues (13, 14) à chaque extrémité de l'essieu (12) comprennent une timonerie de direction (15, 16, 17, 18, 19) permettant de diriger le véhicule au moyen des roues (13, 14).

7. Suspension pour véhicule à roues suivant la revendication 7, caractérisée par un levier coudé de direction (44) articulé sur une partie centrale abaissée de l'essieu (12).

**Patentansprüche**

1. Mit Rädern versehenes Fahrzeug mit einer Aufhängung, die aus einer zum Anbringen von mindestens je einem Rad (13, 14) an ihren beiden Enden ausgerüsteten Achse (12), die in der Längsrichtung des Fahrzeugs durch ein Paar sich Längs erstreckender Arme (21, 31; 22, 32) festgelegt ist, die sowohl vor als auch hinter die Achse vorstehen, einem hinter der Achse (12) angeordneten und dieser parallelen Träger (20) und die Fahrzeugkarosserie auf dem Träger abstützenden Federungsmittlen (24, 25) besteht, dadurch gekennzeichnet, dass

   i) die von der Achse nach vorn vorstehenden Teile (31, 32) des Paars sich Längs erstreckender Arme als in der senkrechten Ebene federnde Ansätze (31, 32) dienen, wobei das von der Achse (12) abgewandte Ende (35, 36) der federnden Ansätze jeweils schwenkbar mit einer Verankerung an der Fahrzeugkarosserie verbunden ist und die federnden Ansätze (31, 32) jeweils einen Querschnitt aufweisen, dessen Fläche mit zunehmenden Abstand von der Achse abnimmt, und

   ii) die hinter die Achse (12) vorstehenden Teile (21, 22) des Paars sich Längs erstreckender Arme als starre Verbindungen zwischen der Achse (12) und dem Träger (20) dienen.

2. Mit Rädern versehenes Fahrzeug mit einer Aufhängung nach Anspruch 1, dadurch gekennzeichnet, dass die Achse (12) mit dem Rest des Fahrzeugs über bewegungsdämpfende Mittel (28, 29) verbunden ist.

3. Aufhängung für ein mit Rädern versehenes Fahrzeug nach Anspruch 1 oder 2, dadurch gekennzeichnet, dass der Träger (20) mit dem Rest des Fahrzeugs über bewegungsdämpfende Mittel (25, 26) verbunden ist.

4. Aufhängung für ein mit Rädern versehenes Fahrzeug nach einem der vorhergehenden Ansprüche, dadurch gekennzeichnet, dass die Achse (12) einen Doppel-T-Trägerquerschnitt aufweist.

5. Aufhängung für ein mit Rädern versehenes Fahrzeug nach einem der vorhergehenden Ansprüche, dadurch gekennzeichnet, dass der Träger (20) durch einen Panhard-Stab (39) gegenüber dem Rest des Fahrzeugs seitlich festgelegt ist.

6. Aufhängung für ein mit Rädern versehenes Fahrzeug nach einem der vorhergehenden Ansprüche, dadurch gekennzeichnet, dass in der Anordnung für das bzw. die Räder (13, 14) an beiden Enden der Achse (12) jeweils ein Lenkgestänge (15, 16, 17, 18, 19) eingebaut ist, wodurch das Fahrzeug mittels der Räder (13, 14) Lenkbar ist.

7. Aufhängung für ein mit Rädern versehenes Fahrzeug nach Anspruch 6, gekennzeichnet durch eine auf einem erniedrigten Mittelteil der Achse (12) schwenkbar gelagerte Lenkkulisse (44).

0015015

Fig.1.

Fig.2.

1

Fig. 3.

0015015